# EUROPEAN PATENT SPECIFICATION

(11) **EP 3 332 132 B1**
(45) Date of publication and mention of the grant of the patent: **01.05.2024**
(21) Application number: 16747490.7
(22) Date of filing: 01.08.2016
(51) Int. Cl.: F15B 1/02

(54) **HYDRAULIC ACTUATOR, PARTICULARLY OF THE SHOCK ABSORBING AND/OR DAMPING TYPE**
HYDRAULISCHER AKTUATOR, INSBESONDERE VOM STOSSABSORBIERENDEN UND/ODER DÄMPFENDEN TYP
ACTIONNEUR HYDRAULIQUE, EN PARTICULIER DU TYPE AMORTISSEMENT ET/OU ABSORPTION DE CHOCS

(30) Priority: 04.08.2015 IT UB20152856
(43) Date of publication of application: 13.06.2018
(73) Proprietor: Antonioni Hydraulic Solutions S.r.l., 52035 Monterchi (IT)
(72) Inventor: ANTONIONI, Angelo, 52035 Monterchi (IT)
(74) Representative: Modiano, Micaela Nadia
(86) International application number: PCT/EP2016/068316
(87) International publication number: WO 2017/021360

(56) References cited:
- EP-A2- 2 322 808
- EP-B1- 2 322 808
- DE-A1-102013 202 802
- DE-U1-202004 014 030
- JP-A- 2006 283 859
- US-A- 3 007 694
- US-A- 4 720 085
- US-A- 4 890 822

## Description

The present invention relates to a hydraulic actuator, particularly of the shock absorbing type.

In the field of lifting devices and, more generally, in the field of devices for handling large loads, it is known to use hydraulic jacks or actuators which, thanks to the action of a pressurized liquid, usually hydraulic oil, on a piston that operates within a cylinder to which the load is connected, allow to generate considerable forces.

The pressurized liquid is usually sent from an external circuit that regulates its inflow into the cylinder so as to vary its direction of motion and its speed.

Since the pressurized liquid is incompressible, the actuator is unable to dissipate the impacts to which it is subjected, both if they are due to pressure peaks of the delivery liquid due to the inertias of the entire system, a phenomenon known commonly as hammer, and if they are due to sudden increases in the load applied to such actuator.

In view of the above, the background art connects the external circuit to an accumulator that contains pressurized gas at a nominal pressure that is higher than the nominal operating pressure of the pressurized liquid.

In this manner, every time the pressurized liquid is subjected to an overpressure that is higher than the pressure value of the gas, such gas begins to compress, protecting and absorbing any pressure peaks by transferring volume to the circuit.

These actuators of the known type, which are used widely for example in earth-moving machines and agricultural and industrial lifting machines, are not devoid of drawbacks, which include the fact that the actuators, used to obviate the pressure peaks described earlier, are installed externally to the actuator proper, since they are connected to the feed circuit of the actuator or to the actuator proper, being an element of hindrance to the normal movement of the actuator or in any case requiring space that is not available in the points where they are installed.

Accordingly, said accumulators are installed by means of a plurality of connecting elements, such as for example pipes and valves, which limit their effectiveness due to flow-rate losses.

Another drawback of actuators of the known type, provided with external accumulators, resides in that they do not allow to install said accumulators safely.

If the accumulator is installed before the safety valve, with which actuators assigned to lifting loads safely must be equipped and which is adapted to control the flow of the oil both in input and an output from the actuator, if the connections of the ducts or of the accumulator proper fail, the load carried by the pressure of the circuit is in fact in free fall, since the oil has an escape path where to flow, rendering the function of the safety valve useless.

Otherwise, if the accumulator is installed after the safety valve, the accumulator is excluded from its function and is useless. A hydraulic actuator according to the preamble of claim 1 is known from DE 10 2013 202802 A1. Another hydraulic actuator is known from JP 2006 283859 A.

The aim of the present invention is to provide a hydraulic actuator that obviates the drawbacks noted above, overcoming the limitations of the background art while complying with the corresponding safety standards for the means on which it can be applied both on the road and off-road.

Within this aim, an object of the present invention is to provide a hydraulic actuator the operation of which can be adjusted so that it is possible to vary its effectiveness according to the desired effect, modifying the operating pressure inside the actuator.

Another object of the present invention is to provide a hydraulic actuator that is extremely simple in terms of construction and use and therefore has low manufacturing and maintenance costs.

This aim, as well as these and other objects that will become better apparent hereinafter, are achieved by a hydraulic actuator, particularly of the shock absorbing and/or damping type, defined in appended claim 1.

Further characteristics and advantages of the invention will become better apparent from the description of two preferred but not exclusive embodiments of a hydraulic actuator, particularly of the shock absorbing and/or damping type, according to the invention, illustrated by way of non limiting example in the accompanying drawings, wherein:
Figures 1 to 3 are three sectional views of a first embodiment of an actuator that acts by extension, according to the invention in the various active steps of its operation;
Figures 4 to 6 are three sectional views of the actuator shown in the preceding figures, acting to protect the extension, according to the invention in the various active steps of its operation;
Figures 7 to 9 are three sectional views of a second embodiment of an actuator that acts by compression, according to the invention in the various active steps of its operation;
Figures 10 to 12 are three sectional views of the actuator shown in Figures 7 to 9, acting to protect compression, according to the invention in the various active steps of its operation;
Figures 13 and 14 are two sectional views of a first variation of the actuators shown in the preceding figures, not covered by the claims;
Figures 15 and 16 are two sectional views of a second variation of the actuators shown in Figures 1 to 12, not covered by the claims;
Figure 17 is a side elevation view of a safety valve applied to the actuators shown in Figures 1 to 12;
Figure 18 is a sectional view of the safety valve shown in Figure 17, taken along the sectional line XVIII-XVIII in its inactive state;
Figure 19 is a sectional view of the safety valve shown in Figure 17, taken along the sectional line XVIII-XVIII in a first active state thereof;
Figure 20 is a sectional view of the safety valve shown in Figure 17, taken along the sectional line XVIII-XVIII in a second active state thereof.

With reference to the figures, the hydraulic actuator, particularly of the shock absorbing and/or damping type, generally designated in the two proposed embodiments by the reference numerals 1a and 1b, comprises a piston 2, which is accommodated slidingly and hermetically in a hollow cylinder 3 so as to divide the internal volume of the latter into two chambers 4 and 5 that are mutually separated by the head 6 of the piston 2.

In greater detail, depending on the embodiment considered, the two chambers 4 and 5 can be connected separately, respectively by means of at least one delivery duct 18 and at least one discharge duct 17, to a first circuit that is adapted to introduce under pressure a first fluid, for example oil, in one of the two chambers 4 or 5, with consequent emptying of the other chamber 5 or 4 for the extension or compression motion of the piston 2 with respect to the hollow cylinder 3.

According to the invention, a first movable element 7 is provided, which is accommodated so that it can slide hermetically in a longitudinal cavity 8 that is defined inside the stem 9 of the piston 2 so as to divide the longitudinal cavity 8 into two portions 10 and 11, the first of which is connected to one of the two chambers 4 and 5, depending on the embodiment considered, and the second of which can be connected to a second circuit that is adapted to introduce under pressure a second fluid, for example gas, in the second portion 11.

As will be described better hereinafter, the second fluid cited above has a coefficient of compressibility, i.e., the ability to be compressed for an equal pressure, and a nominal pressure that are greater than those of the first fluid, so as to act as a shock absorber and/or damper in case of sudden pressure peaks in the chamber 4 or 5 that is connected to the first portion 10 of the longitudinal cavity 8 defined inside the stem 9 of the piston 2.

Conveniently, there are also fluid flow control means 12 interposed between the first portion 10 and the chamber 4 or 5 that is connected to the first portion 10.

More specifically, the fluid flow control means 12 define a main connecting channel 13 and one or more secondary connecting channels 14 with the main connecting channel 13 having a passage section that has a larger diameter than the passage section offered by the secondary connecting channels 14.

Advantageously, the main connecting channel 13 is provided with a normally-closed one-way valve 15, for example of the type with a ball that can move in contrast with the action of elastic means, differently from the secondary connecting channels 14, which are free from obstructions.

In this manner, as will be described better hereinafter, the first fluid can flow out easily and quickly from the chamber 4 or 5 to the first portion 10 of the longitudinal cavity 8 both through the secondary connecting channels 14 and through the main connecting channel 13, which is open by way of the opening of the one-way valve 15, and can flow out in the opposite direction only through the secondary connecting channels 14, since the main connecting channel 13 is closed, thus entailing an outflow rate that is very low with respect to the one when the one-way valve 15 is open.

Operation of the hydraulic actuators 1a and 1b is described hereinafter.

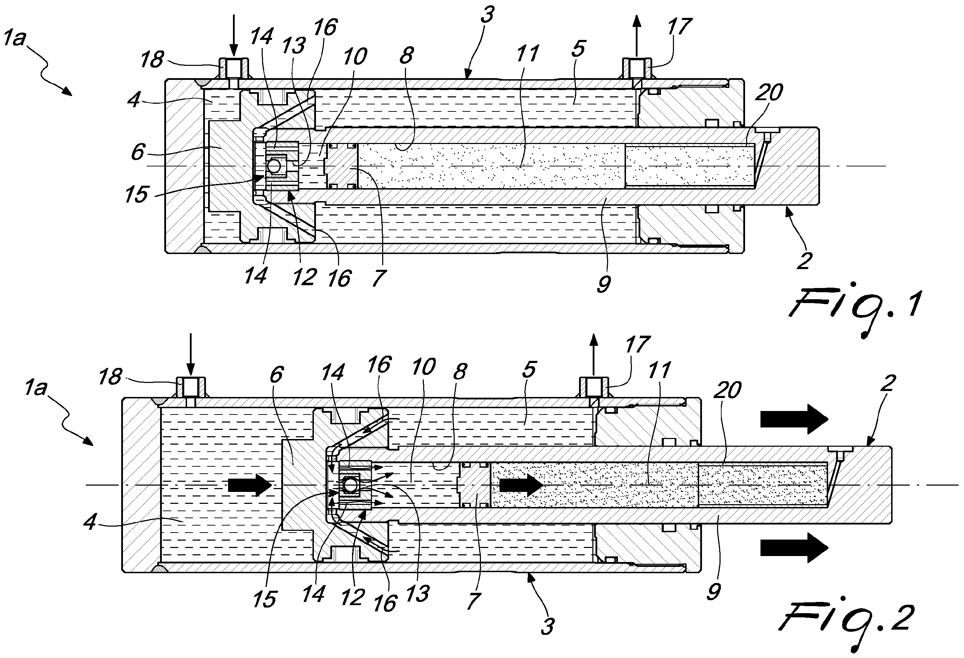

With reference to Figures 1 to 3, a hydraulic actuator 1a that acts by extension is shown in the first proposed embodiment.

Starting from a position in which the piston 2 is completely retracted into the hollow cylinder 3, shown in Figure 1, the external circuit for delivery of the first fluid feeds the chamber 4, emptying the chamber 5 in order to make the piston 2 exit.

Due to the inertias of the system, in this initial transient situation a pressure peak can occur which is such that the pressure of the first fluid exceeds its nominal value, leading to the phenomenon commonly known as hammer.

If this overpressure is such as to exceed also the value of the nominal pressure of the second fluid contained in the second portion 11 of the longitudinal cavity 8 provided internally in the stem 9 of the piston 2, the one-way valve 15 opens, making the first fluid flow out rapidly inside the first portion 10 of the longitudinal cavity 8, with a corresponding displacement of the first movable element 7 and a consequent compression of the second fluid, as shown in Figure 2.

This flow of the first fluid from the chamber 5 inside the first portion 10, which occurs by means of one or more ducts 16 defined inside the head 6 of the piston 2, continues until a new condition of equilibrium between the two fluids has been reached.

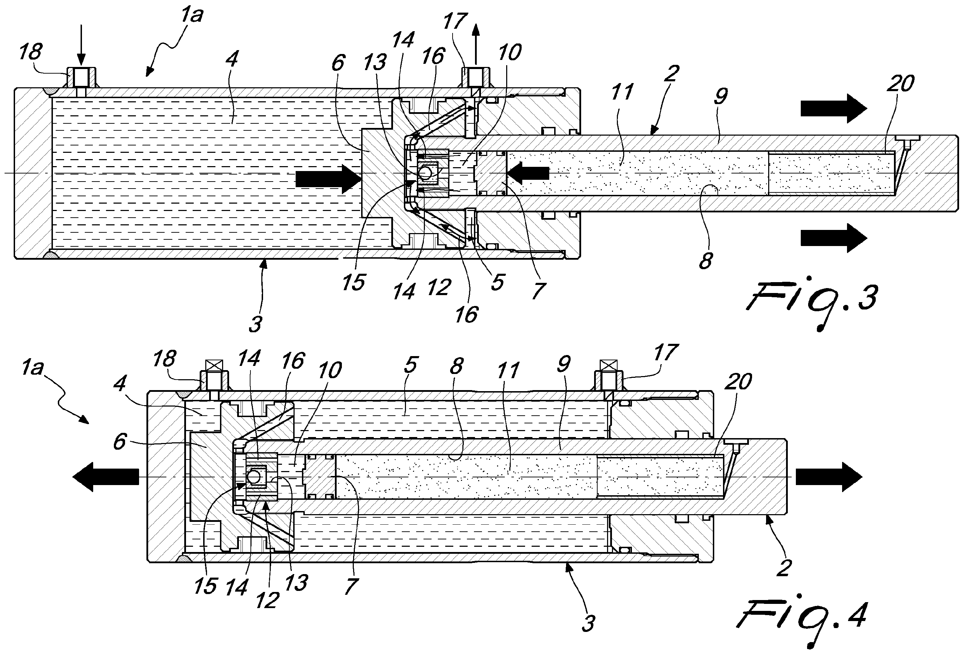

Once the pressure peak has ceased, as shown in Figure 3, the second fluid undergoes an expansion, recovering the initial volume and making the first fluid flow out from the first portion 10 to the chamber 5 exclusively through the secondary connecting channels 14, since the main connecting channel 13 remains closed.

In this manner, the outflow rate is lower than what occurred previously, allowing the hydraulic actuator 1a to react to the hammer in a damped manner.

With reference to Figures 4 to 6, again in the first embodiment proposed, a hydraulic actuator 1a for protecting extension is shown.

In normal operating conditions, the hydraulic actuator 1a shown in Figure 4 has the delivery and discharge ducts 18 and 17 closed by means of an adapted safety valve, which is indicated symbolically for the sake of graphic simplicity by a square with an X.

In this manner, the first fluid is locked in both directions and the piston 2 remains ideally in position in the hollow cylinder 3 by way of the pressure applied by the first pressurized fluid in the chambers 4 and 5.

In this configuration, the first fluid that is present in the chamber 5, which is connected to the first portion 10 of the longitudinal cavity 8 by means of the ducts 16 defined inside the head 6 of the piston 2, is in equilibrium with the second fluid that is present in the second portion 11 of the longitudinal cavity 8 by means of the first movable element 7, filtering through the secondary connecting channels 14.

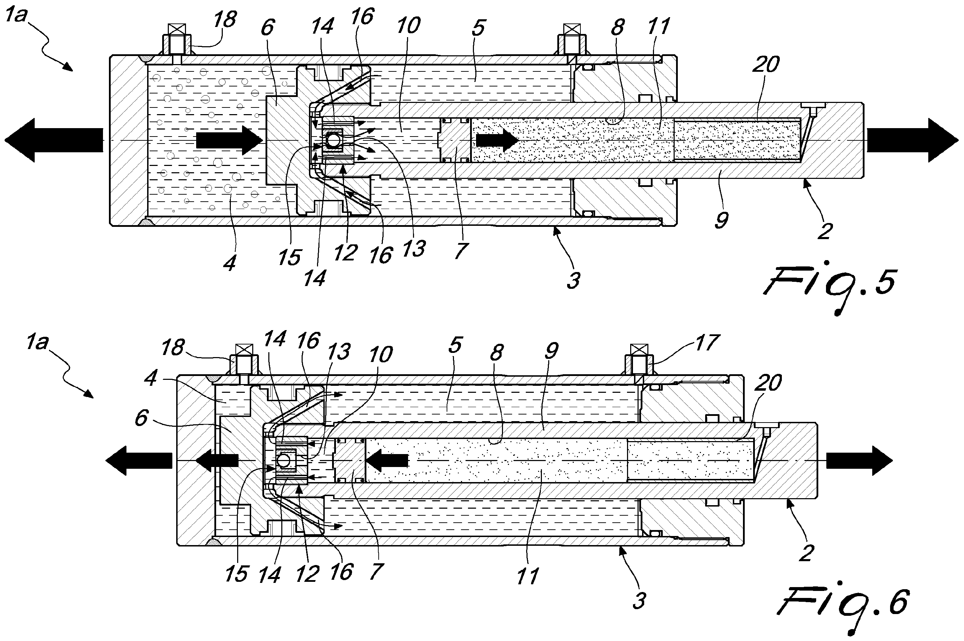

In case of a sudden overload in extension, as shown in Figure 5, an overpressure is generated in the chamber 5 that is defined around the stem 9 of the piston 2 and, when it becomes greater than the pressure of the second fluid contained in the second portion 11 of the longitudinal cavity 8, leads to the temporary opening of the one-way valve 15, causing the first fluid to filter through the primary connecting channel 13, which leads to the movement of the first movable element 7, which compresses the second fluid that is present in the second portion 11 until a new condition of equilibrium is reached.

In this manner, the second fluid yields volume, allowing the shock absorbing extension movement of the hydraulic actuator 1a.

Simultaneously, the first fluid that is present in the chamber 4 assumes a negative pressure, possibly bringing such fluid to cavitation, as shown by the bubbles illustrated in Figure 5.

Since this is hydraulic oil, this phenomenon may not lead to structurally damage to the hydraulic actuator 1a, but if the internal walls of the hollow cylinder 3 and the outer walls of the piston 2 suffer damage, there may be a gas compensation buffer connected to the chamber 4 so as to prevent the first fluid from entering cavitation, since such gas can expand in case of pressure decreases.

Once the overload condition is over, as shown in Figure 6, the second fluid resumes expanding and the first fluid slowly flows out exclusively through the secondary connecting channels 14, since the one-way valve 15 has returned to its inactive condition, closing the main connecting channel 13.

In this manner, a return of the piston 2 to its working position occurs with a damped speed.

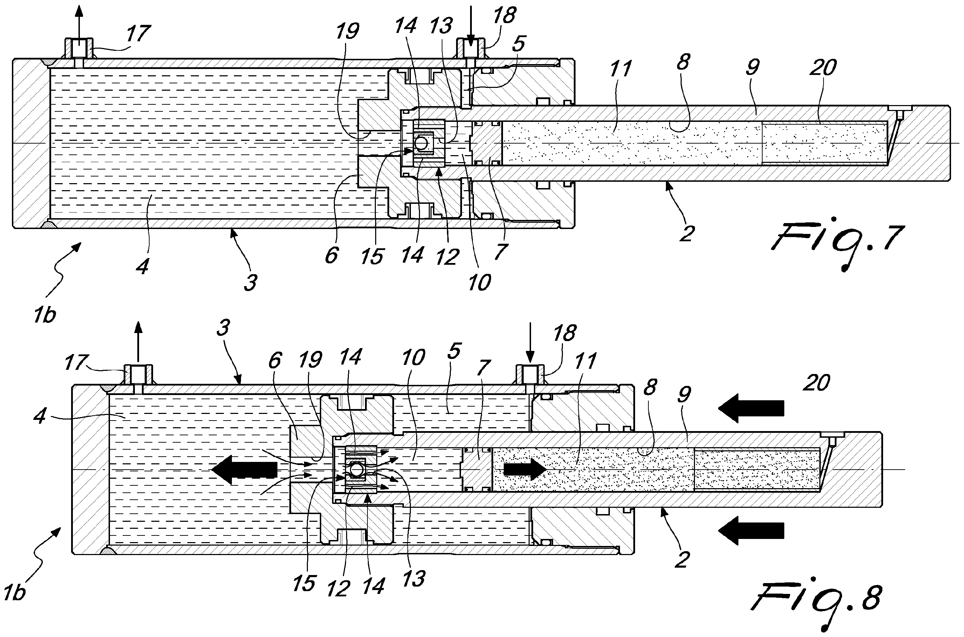

With reference to Figures 7 to 9, a hydraulic actuator 1b that acts by compression is shown in the second proposed embodiment.

Starting from a position in which the piston 2 is fully extracted from the hollow cylinder 3, shown in Figure 7, the external circuit for delivery of the first fluid feeds the chamber 5, emptying the chamber 4 in order to make the piston 2 retract.

Due to the inertias of the system, in this initial transient situation a pressure peak can occur such that the pressure of the first fluid exceeds its nominal value, leading to the phenomenon commonly known as hammer.

If this overpressure is such as to exceed also the value of the nominal pressure of the second fluid contained in the second portion 11 of the longitudinal cavity 8 provided internally in the stem 9 of the piston 2, the one-way valve 15 opens, causing the rapid outflow of the first fluid into the first portion 10 of the longitudinal cavity 8, with corresponding movement of the first movable element 7 and consequent compression of the second fluid, as shown in Figure 8.

This flow of the first fluid from the chamber 5 into the first portion 10, which occurs by means of one or more ducts 19 defined inside the head 6 of the piston 2, continues until a new condition of equilibrium between the two fluids has been reached.

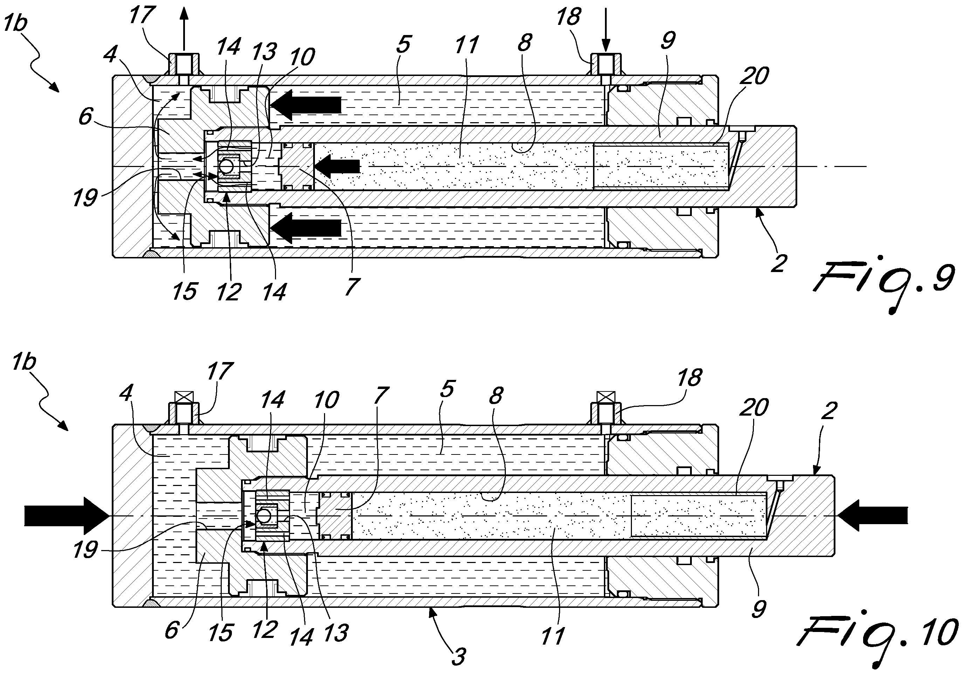

Once the pressure peak has ceased, as shown in Figure 9, the second fluid undergoes an expansion, recovering the initial volume and causing the outflow of the first fluid from the first portion 10 to the chamber 4 through the secondary connecting channels 14 alone, since the main connecting channel 13 remains closed.

In this manner, the outflow rate is lower than what occurred previously, allowing the hydraulic actuator 1b to react to the hammer in a damped manner.

With reference to Figures 10 to 12, a hydraulic actuator 1b to protect compression is shown again in the second proposed embodiment.

In normal operating conditions, the hydraulic actuator 1b shown in Figure 10 has the discharge and delivery ducts 17 and 18 closed by means of an adapted safety valve, indicated symbolically, for the sake of graphical simplicity, by a square with an X.

In this manner, the first fluid is blocked in both directions and the piston 2 remains ideally in position in the hollow cylinder 3 by way of the pressure applied by the first pressurized fluid in the chambers 4 and 5.

In this configuration, the first fluid that is present in the chamber 4, which is connected to the first portion 10 of the longitudinal cavity 8 by means of the duct 19 defined inside the head 6 of the piston 2, is in equilibrium with the second fluid that is present in the second portion 11 of the longitudinal cavity 8 by means of the first movable element 7 by filtering through the secondary connecting channels 14.

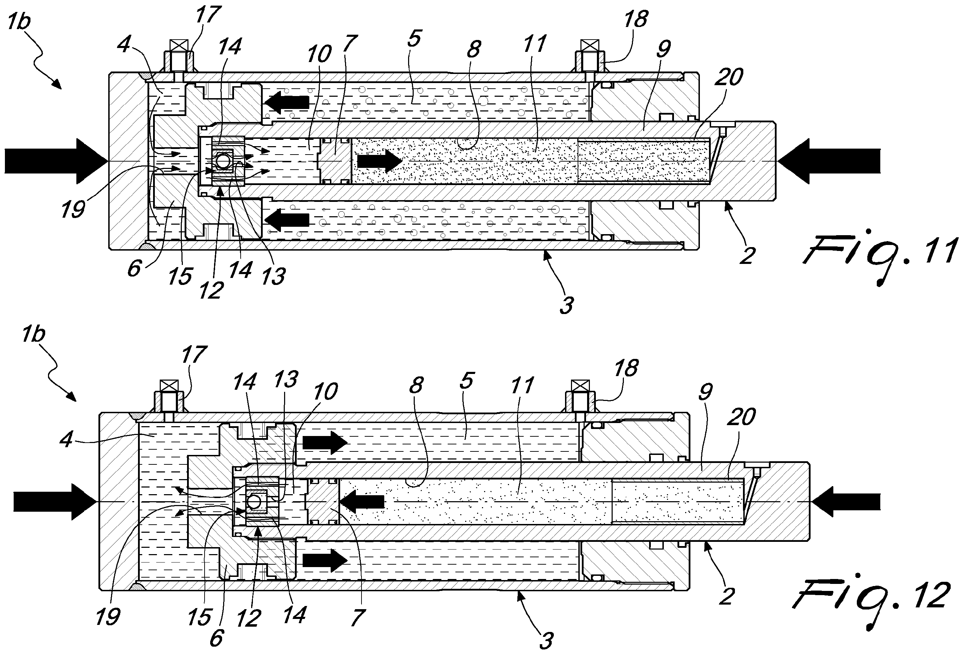

In case of sudden overload in compression, as shown in Figure 11, an overpressure is generated in the chamber 4 that is defined around the stem 9 of the piston 2 and, when it becomes greater than the pressure of the second fluid contained in the second portion 11 of the longitudinal cavity 8, leads to the temporary opening of the one-way valve 15, causing the first fluid to filter through the main connecting channel 13, and this leads to the displacement of the first movable element 7, which compresses the second fluid that is present in the second portion 11 until it reaches a new equilibrium condition.

In this manner, the second fluid yields volume, allowing the damped movement in compression of the hydraulic actuator 1b.

At the same time, the first fluid that is present in the chamber 5 assumes a negative pressure, possibly bringing such fluid to cavitation, as shown by the bubbles illustrated in Figure 11.

Since this is hydraulic oil, this phenomenon may not lead to structural damage to the hydraulic actuator 1b, but if the internal walls of the hollow cylinder 3 and the outer walls of the piston 2 are damaged there can be a gas compensation buffer that is connected to the chamber 5 so as to prevent the first fluid from cavitating, such gas being able to expand in case of pressure decreases.

Once the overload condition has passed, as shown in Figure 12, the second fluid resumes expanding and the first fluid flows out slowly exclusively through the secondary connecting channels 14, since the one-way valve 15 has returned to its inactive condition, closing the main connecting channel 13.

In this manner, a return at a damped rate of the piston 2 to its working position occurs.

Furthermore, as a completion of the two hydraulic actuators 1a and 1b, there is an element 20 for limiting the stroke of the first movable element 7 arranged in the longitudinal cavity 8 so as to limit the minimum volume in which such second fluid can be compressed.

The operating speed of the actuators 1a and 1b, as well as their rigidity, can be adjusted in different manners.

For example, the passage sections of the first fluid and the volume of the chambers where it is located can be sized so that the piston 2 can move at the desired speeds, utilizing the slowing of the first fluid that flows through the calibrated holes and simultaneously supports the load without undergoing cavitation.

Similarly, by altering the internal pressure of one of the two chambers 4 and 5 with respect to the pressure of the other chamber 4 or 5 and by calibrating differently the passage sections of the delivery and discharge ducts 18 and 17 it is possible to stiffen the effect of the actuator 1a or 1b according to the requirements.

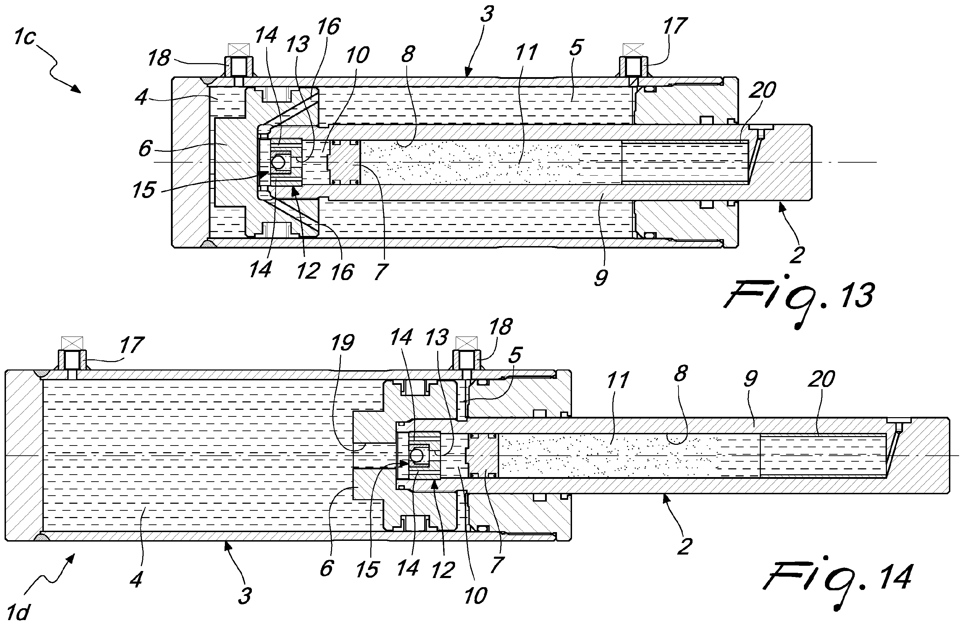

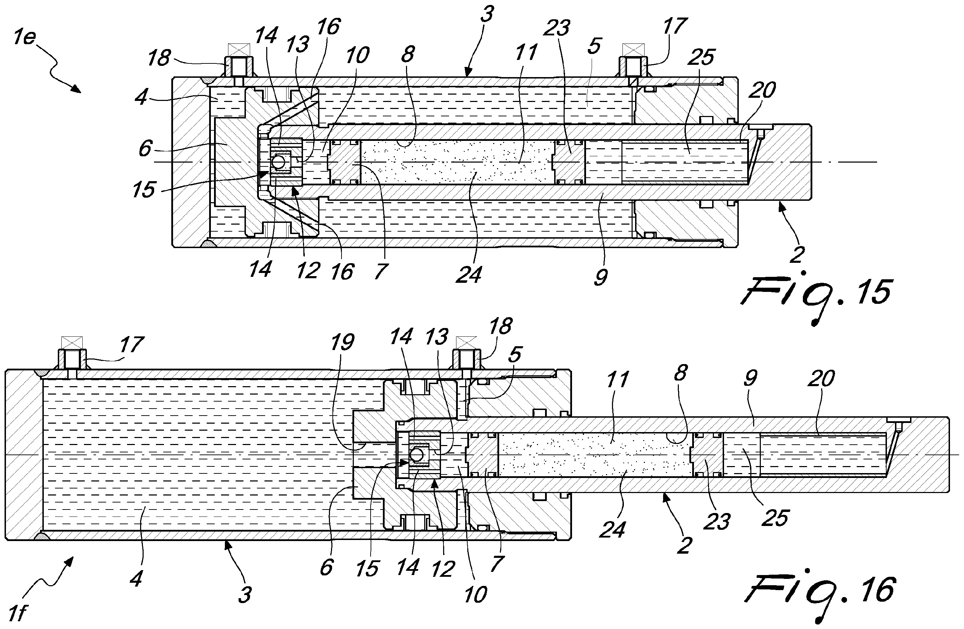

With reference to Figures 13 to 16, not covered by the claims, another way to vary the shock absorbing and/or damping action of the hydraulic actuator may consists in pumping a third fluid into the second portion 11 with a coefficient of compressibility that is lower than that of the second fluid.

For example, as shown in the variations 1c and 1d of the hydraulic actuators 1a and 1b, the third fluid can be in contact with the second one and be pumped in a calibrated manner into the same second portion 11.

If gas and oil, respectively, are used for the second fluid and the third fluid, the two fluids do not mix, acting independently and in an unaltered manner with respect to each other.

In other words, by increasing the quantity of the third fluid, a more rigid hydraulic actuator 1c or 1d and vice versa is obtained.

If the fluids used might be subjected to chemical reactions once they come into contact, it is possible to provide a second movable element 23, conveniently provided with a valve for the inflow of the second fluid and with a perforated through stem for the loading of gas, which is accommodated slidingly and hermetically in the longitudinal cavity 8 at the second portion 11, so as to divide the second portion 11 into two other portions 24 and 25, in which the first of the two contains the second fluid and the second of the two contains the third fluid.

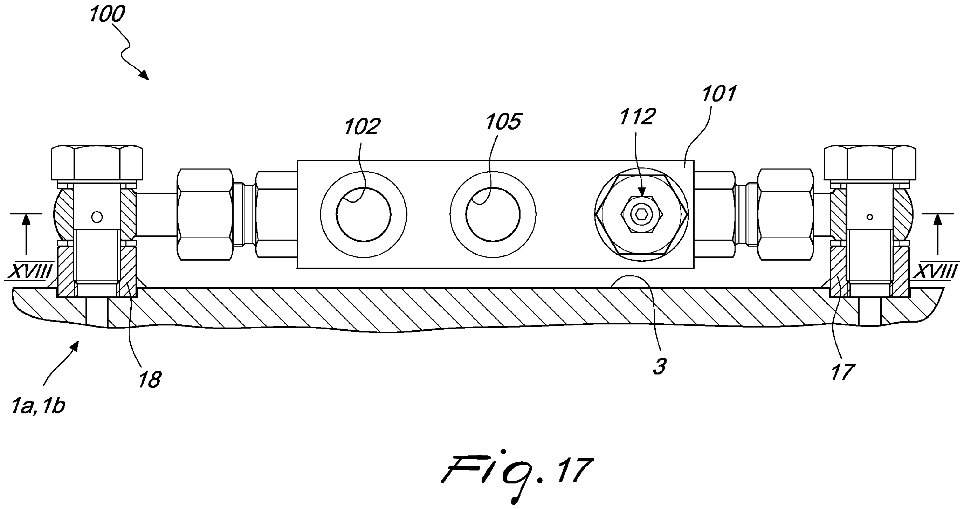

With reference to Figures 17 to 20, according to the invention, a further possibility to control and vary the shock absorbing and/or damping action of the hydraulic actuators 1a and 1b consists in providing them with at least one safety valve 100 of the double-acting type with limited control on the delivery and a maximum pressure valve on the return which are hydraulically connected to the delivery duct 18 and to the discharge duct 17.

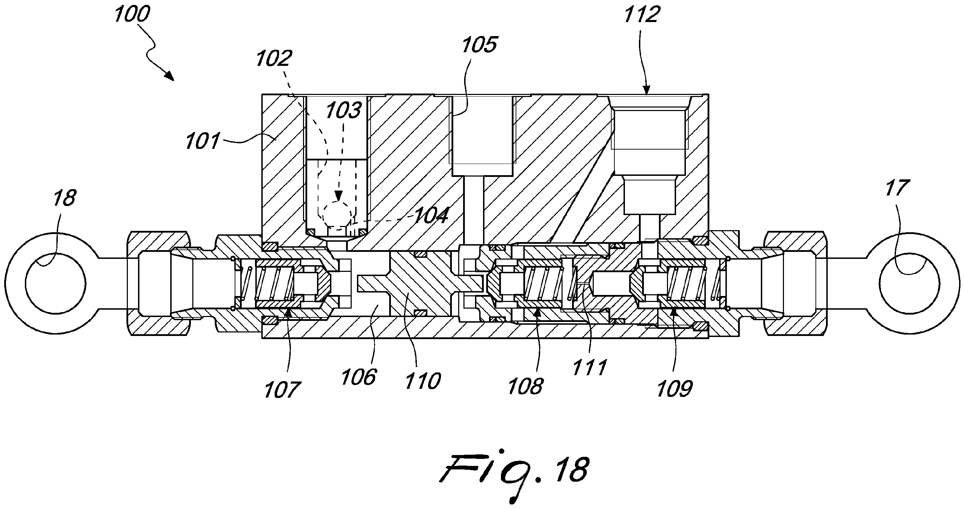

More specifically, as shown in detail in Figure 18, the safety valve 100 comprises a valve body 101, which defines a first feed or discharge duct 102 provided with a first normally-closed one-way valve 103, for example of the type with a ball that can move in contrast with the action of elastic means, which acts in output to the valve body 101, and with a first calibrated port 104 that is parallel to the first one-way valve 103.

Furthermore, the valve body 101 also defines a second feed or discharge duct 105 that is connected, together with the first feed or discharge duct 102, to a main chamber 106 that is defined inside the valve body 101.

Conveniently, the first feed or discharge duct 102 is connected to the discharge duct 17 the hydraulic actuator 1a or 1b by means of a second normally-closed one-way valve 107, for example of the type with a piston that can move in contrast with the action of elastic means, accommodated within the main chamber 106 and acting in output to the valve body 101 from the first feed or discharge duct 102 toward the discharge duct 17.

Similarly conveniently, the second feed or discharge duct 105 is connected to the delivery duct 18 of the hydraulic actuator 1a or 1b by means of a third normally-closed one-way valve 108 and a fourth normally-closed one-way valve 109, which also are for example of the type with a piston that can move in contrast with the action of elastic means, are accommodated inside the main chamber 106 in sequence with respect to each other and act in output to the valve body 101 from the second feed or discharge 105 toward the delivery duct 18.

Advantageously, between the first feed or discharge duct 102 and the second feed or discharge duct 105 there is a pilot slider 110 of the second one-way valve 107 and of the third one-way valve 108, which is accommodated so that it can slide hermetically in the main chamber 106, so as to actuate selectively the two one-way valves 107 and 108, depending on which of the two feed or discharge ducts 102 and 105 provides the supply.

Finally, between the third one-way valve 108 and the fourth one-way valve 109 there is a second calibrated port 111 and there is further a maximum-pressure valve 112 that is accommodated in the valve body 101 and is connected to the third one-way valve 108 and to the fourth one-way valve 109 so as to bypass the second calibrated port 111 when needed.

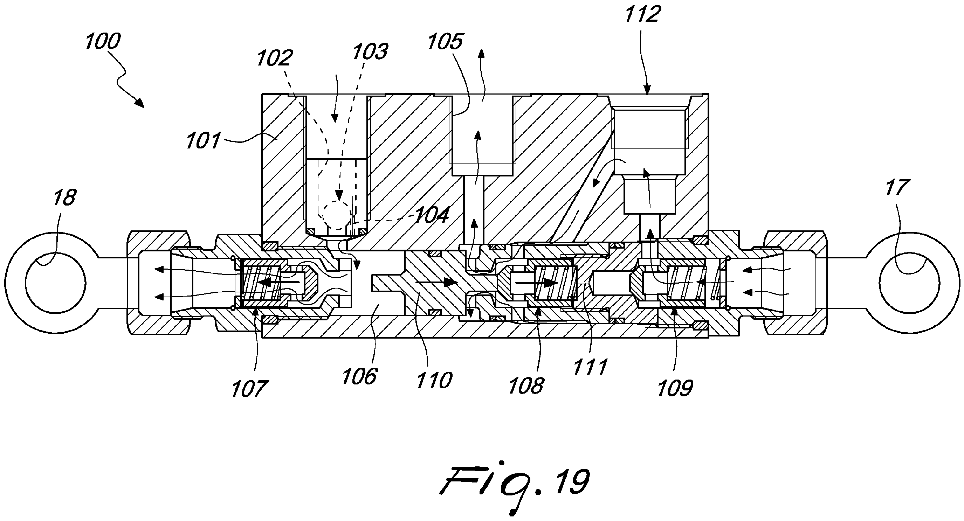

With reference to Figures 19 and Figures 4 and 10, by feeding the safety valve 100 through the first feed or discharge duct 102 the first fluid passes at a reduced speed through the first calibrated port 104, creating an overpressure that switches the second one-way valve 107 and moves the pilot slider 110, which switches the third one-way valve 108.

Under load, the piston 2 leads to a gradual pressure increase in the chambers 4 or 5 that is subject to a decrease in volume until the maximum pressure set on the maximum pressure valve 112 is reached, causing the first fluid to flow out directly from the fourth one-way valve 109, switched to the closed state, to the third one-way valve 108, switched to the open state and connected to the second feed or discharge duct 105.

The higher the maximum pressure value is set, the more the effect of hydraulic actuators 1a and 1b is rigid.

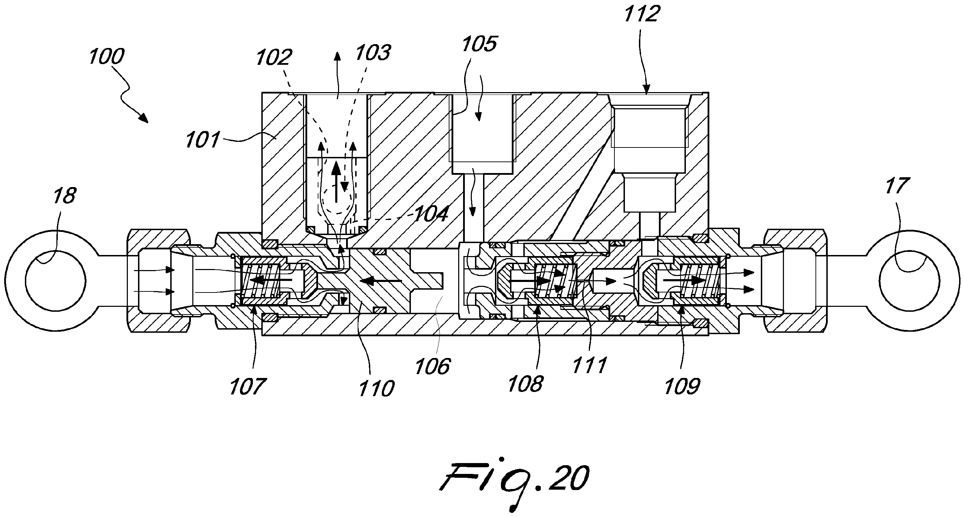

Vice versa, with reference to Figure 20 and to Figures 4 and 10, by supplying the safety valve 100 through the second feed or discharge duct 105 the first fluid opens in sequence the third one-way valve 108 and the fourth one-way valve 109, flowing at a reduced rate through the second calibrated port 111, and moves the pilot slider 110, which switches the second one-way valve 107 and allows the first fluid to flow rapidly through the first feed or discharge duct 102, opening the first one-way valve 103.

In this manner, the piston 2 moves by extension or compression, depending on whether it is the hydraulic actuator 1a or 1b, without altering the pressure of the second fluid contained in the longitudinal cavity 8.

In practice it has been found that the hydraulic actuator, particularly of the shock absorbing and/or damping type, according to the present invention, achieves fully the intended aim and objects, since it allows to act as a shock absorbing and/or damping element, respectively, in response to sudden overloads or pressure peaks (hammer), without entailing an increase in space occupation of any type, giving immediate intervention responses.

In fact, since it contains a minimum quantity of gas, it therefore does not require an external accumulator, gaining both in terms of space occupation and in terms of costs.

In this manner, on-road applications of the actuator according to the invention, for example on farming tractors with tools carried in a hanging configuration, lead to great stability of the vehicle, to excellent control and comfort, eliminating jolts and loss of road grip, so as to decrease the risk of losing steering control.

Furthermore, the hydraulic actuator according to the present invention obviates the drawbacks noted above regarding the background art, since as the accumulator is provided inside the actuator proper the accumulator is protected by the safety valve, which in case of anomaly prevents any loss of oil, allowing at most only losses of gas pressure.

In this case, a position change of the piston of a few millimeters occurs and then stabilizes, making the actuator work in full safety.

Additionally, the hydraulic actuator according to the present invention, by not using external circuits and/or accumulators, is free from load losses that would compromise its operation.

Furthermore, in the case of a plurality of actuators the configuration is independent, since it is possible to modulate its operation by varying the value of the pressure of the second fluid.

Furthermore, another advantage of the hydraulic actuator according to the invention resides in that it is possible to vary the internal pressure thereof, altering its operating rigidity according to the operating requirements.

The hydraulic actuator, particularly of the shock absorbing and/or damping type, thus conceived is susceptible of numerous modifications and variations. However, in any case, the scope of the invention is defined by the appended claims.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A hydraulic actuator (1a, 1b), particularly of the shock absorbing and/or damping type, comprising a piston (2) that is accommodated so that it can slide hermetically in a hollow cylinder (3) so as to divide the internal volume of said hollow cylinder (3) into two chambers (4, 5) mutually separated by the head (6) of said piston (2), said two chambers (4, 5) being connectable separately, respectively by means of at least one delivery duct (18) and at least one discharge duct (17), to a first circuit adapted to feed under pressure a first fluid into one of said two chambers (4, 5) with consequent emptying of the other of said two chambers (4, 5) for the extension or compression movement of said piston (2) with respect to said hollow cylinder (3), wherein the hydraulic actuator (1a, 1b) comprises a first movable element (7) that is accommodated so that it can slide hermetically in a longitudinal cavity (8) defined inside a stem (9) of said piston (2) so as to divide said longitudinal cavity (8) into two portions (10, 11) with the first (10) of said two portions connected to one of said two chambers (4, 5) and with the second (11) of said two portions connectable to a second circuit adapted to feed under pressure a second fluid into said second portion (11), said second fluid having a coefficient of compressibility and a nominal pressure greater than those of said first fluid so as to act as a shock absorber and/or damper in case of sudden peaks of pressure in said chamber (4, 5) connected to said first portion (10) of said longitudinal cavity (8) defined inside said stem (9) of said piston (2), **characterized in that** the hydraulic actuator (1a, 1b) further comprises at least one safety valve (100) of the double-acting type with limited control on the delivery and a maximum-pressure valve on the return, which is connected hydraulically to said at least one delivery duct (18) and to said at least one discharge duct (17), so as to be able to vary the shock absorbing and/or damping action of said hydraulic actuator (1a, 1b) wherein said at least one safety valve (100) comprises a valve body (101) that defines a first feed or discharge duct (102) provided with a first normally-closed one-way valve (103) and with a first calibrated port (104) that is parallel to said first one-way valve (103) and a second feed or discharge duct (105), which are connected to a main chamber (106) defined inside said valve body (101), said first feed or discharge duct (102) being connected to said delivery duct (18) by means of a second normally-closed one-way valve (107) which is accommodated inside said main chamber (106) and allows a flow from said first feed or discharge duct (102) toward said delivery duct (18), said second feed or discharge duct (105) being connected to said discharge duct (17) by means of a third normally-closed one-way valve (108) and a fourth normally-closed one-way valve (109), which are accommodated inside said main chamber (106) in sequence to each other and allow a flow from said second feed or discharge duct (105) toward said discharge duct (17), wherein between said first feed or discharge duct (102) and said second feed or discharge duct (105) there is provided a pilot slider (110) which is accomodated between said second one-way valve (107) and of said third one-way valve (108) so that it can slide hermetically in said main chamber (106), wherein between said third one-way valve (108) and said fourth one-way valve (109) there is provided a second calibrated port (111) and also a maximum-pressure valve (112) accommodated in said valve body (101) and wherein the maximum-pressure valve (112) is connected to said third one-way valve (108) and to said fourth one-way valve (109) so as to bypass said second calibrated port (111).

2. The hydraulic actuator (1a, 1b) according to claim 1, **characterized in that** it comprises fluid flow control means (12) interposed between said first portion (10) and said chamber (4, 5) connected to said first portion (10).

3. The hydraulic actuator (1a, 1b) according to claim 2, **characterized in that** said fluid flow control means (12) define a main connecting channel (13) and at least one secondary connecting channel (14), said main connecting channel (13) having a passage section that has a larger diameter than the passage section of said at least one secondary connecting channel (14) and being provided with a normally-closed one-way valve (15) adapted to prevent the passage of said first fluid from said first portion (10) to said chamber (4, 5), said at least one secondary connecting channel (14) being free from obstructions.

4. The hydraulic actuator (1a, 1b) according to claim 3, **characterized in that** said one-way valve (15) is of the type with a ball that can move in contrast with the action of elastic means.

5. The hydraulic actuator (1a, 1b) according to one or more of the preceding claims, **characterized in that** said first fluid is oil and said second fluid is gas.

6. The hydraulic actuator (1a) according to one or more of the preceding claims, **characterized in that** it is of the type with extension protection.

7. The hydraulic actuator (1a) according to claim 6, **characterized in that** said head (6) of said piston (2) has at least one duct (16) adapted to connect said first portion (10) to one of said chambers (5) that is defined around said stem (9) of said piston (2).

8. The hydraulic actuator (1b) according to one or more of claims 1 to 5, **characterized in that** it is of the type with compression protection.

9. The hydraulic actuator (1b) according to claim 8, **characterized in that** said head (6) of said piston (2) has at least one duct (19) adapted to connect said first portion (10) to one of said chambers (4) that is defined at the crown of said head (6) of said piston (2).

10. The hydraulic actuator (1a, 1b) according to one or more of the preceding claims, **characterized in that** it comprises a stroke limiter (20) of said first movable element (7) arranged in said longitudinal cavity (8) so as to limit the minimum volume in which said second fluid can be compressed.

## Patentansprüche

1. Ein Hydraulikantrieb (1a, 1b), insbesondere vom stoßabsorbierenden und/oder -dämpfenden Typ, der einen Kolben (2) umfasst, welcher so, dass er hermetisch gleiten kann, in einem Hohlzylinder (3) untergebracht ist, um das innere Volumen des Hohlzylinders (3) in zwei Kammern (4, 5) zu unterteilen, die voneinander durch den Kopf (6) des Kolbens (2) getrennt sind, wobei die beiden Kammern (4, 5) separat über mindestens eine Einlassleitung (18) beziehungsweise mindestens eine Ablassleitung (17) mit einem ersten Kreislauf verbindbar sind, der ausgebildet ist, um unter Druck einer der beiden Kammern (4, 5) ein erstes Fluid zuzuführen, mit daraus folgender Entleerung der anderen der beiden Kammern (4, 5) zum Zwecke der Extensions- oder Kompressionsbewegung des Kolbens (2) mit Bezug auf den Hohlzylinder (3), wobei der Hydraulikantrieb (1a, 1b) ein erstes bewegliches Element (7) umfasst, welches so, dass es hermetisch gleiten kann, in einem länglichen Hohlraum (8) untergebracht ist, welcher in einem Schaft (9) des Kolbens (2) bestimmt ist, um den länglichen Hohlraum (8) in zwei Abschnitte (10, 11) zu unterteilen, wobei der erste (10) der beiden Abschnitte mit einer der beiden Kammern (4, 5) verbunden ist und der zweite (11) der beiden Abschnitte mit einem zweiten Kreislauf verbindbar ist, welcher ausgebildet ist, um unter Druck dem zweiten Abschnitt (11) ein zweites Fluid zuzuführen, wobei das zweite Fluid einen Kompressionskoeffizienten und einen Nenndruck hat, die größer sind als diejenige des ersten Fluids, um so im Falle plötzlicher Druckspitzen in der Kammer (4, 5), die mit dem ersten Abschnitt (10) des in dem Schaft (9) des Kolbens (2) bestimmten länglichen Hohlraums (8) verbunden ist, als Stoßdämpfer zu dienen;
**dadurch gekennzeichnet, dass** der Hydraulikantrieb (1a, 1b) weiter mindestens ein Sicherheitsventil (100) vom doppeltwirkenden Typ mit begrenzter Kontrolle bei der Abgabe und ein Überdruckventil beim Zurückströmen umfasst, welches hydraulisch mit der mindestens einen Einlassleitung (18) und der mindestens einen Ablassleitung (17) verbunden ist, um die stoßabsorbierende und/oder -dämpfende Wirkung des Hydraulikantriebs (1a, 1b) zu verändern, wobei das mindestens eine Sicherheitsventil (100) einen Ventilkörper (101) umfasst, der eine erste Speise- oder Ablassleitung (102) bestimmt, ausgestattet mit einem ersten normal geschlossenen Einwegventil (103) und einem ersten kalibrierten Port (104), der parallel zu dem ersten Einwegventil (103) ist, und eine zweite Speise- oder Ablassleitung (105), die mit einer in dem Ventilkörper (101) bestimmten Hauptkammer (106) verbunden sind, wobei die erste Speise- oder Ablassleitung (102) mit der Einlassleitung (18) über ein zweites normal geschlossenes Einwegventil (107) verbunden ist, das in der Hauptkammer (106) untergebracht ist und einen Strom von der ersten Speise- oder Ablassleitung (102) zu der Einlassleitung (18) gestattet; wobei die zweite Speise- oder Ablassleitung (105) mit der Ablassleitung (17) über ein drittes normal geschlossenes Einwegventil (108) und ein viertes normal geschlossenes Einwegventil (109) verbunden ist, die sequentiell zueinander in der Hauptkammer (106) untergebracht sind und einen Strom von der zweiten Speise- oder Ablassleitung (105) zu der Ablassleitung (17) ermöglichen; wobei zwischen der ersten Speise- oder Ablassleitung (102) und der zweiten Speise- oder Ablassleitung (105) ein Auslöseschieber (110) positioniert ist, welcher zwischen dem zweiten Einwegventil (107) und dem dritten Einwegventil (108) positioniert ist, so dass er hermetisch in der Hauptkammer (106) gleiten kann; wobei zwischen dem dritten Einwegventil (108) und dem vierten Einwegventil (109) ein zweiter kalibrierter Port (111) und ein Überdruckventil (112) untergebracht sind, welches in dem Ventilkörper (101) positioniert ist, und wobei das Überdruckventil (112) mit dem dritten Einwegventil (108) und dem vierten Einwegventil (109) verbunden ist, um den zweiten kalibrierten Port (111) zu umgehen.

2. Der Hydraulikantrieb (1a, 1b) gemäß Anspruch 1, **dadurch gekennzeichnet, dass** er Fluidstrom-Steuerungsmittel (12) umfasst, die zwischen dem ersten Abschnitt (10) und der mit dem ersten Abschnitt (10) verbundenen Kammer (4, 5) angeordnet sind.

3. Der Hydraulikantrieb (1a, 1b) gemäß Anspruch 2, **dadurch gekennzeichnet, dass** die Fluidstrom-Steuerungsmittel (12) einen Haupt-Verbindungskanal (13) und mindestens einen sekundären Verbindungskanal (14) bestimmen, wobei der Haupt-Verbindungskanal (13) einen Durchlassabschnitt hat, welcher einen größeren Durchmesser hat als der Durchlassabschnitt des mindestens einen sekundären Verbindungskanals (14) und mit einem normal geschlossenen Einwegventil (15) ausgestattet ist, welches ausgebildet ist, um den Strom des ersten Fluids von dem ersten Abschnitt (10) zu der Kammer (4, 5) zu verhindern; wobei der mindestens eine sekundäre Verbindungskanal (14) frei von Hindernissen ist.

4. Der Hydraulikantrieb (1a, 1b) gemäß Anspruch 3, **dadurch gekennzeichnet, dass** das Einwegventil (15) vom Typ mit einer Kugel ist, die sich im Kontrast zur Wirkung elastischer Mittel bewegen kann.

5. Der Hydraulikantrieb (1a, 1b) gemäß einem oder mehreren der obigen Ansprüche, **dadurch gekennzeichnet, dass** das erste Fluid Öl ist und das zweite Fluid Gas ist.

6. Der Hydraulikantrieb (1a) gemäß einem oder mehreren der obigen Ansprüche, **dadurch gekennzeichnet, dass** er vom Typ mit Extensionsschutz ist.

7. Der Hydraulikantrieb (1a) gemäß Anspruch 6, **dadurch gekennzeichnet, dass** der Kopf (6) des Kolbens (2) mindestens eine Leitung (16) hat, die ausgebildet ist, um den ersten Abschnitt (10) mit einer der Kammern (5) zu verbinden, die um den Schaft (9) des Kolbens (2) herum bestimmt ist.

8. Der Hydraulikantrieb (1b) gemäß einem oder mehreren der Ansprüche 1 bis 5, **dadurch gekennzeichnet, dass** er vom Typ mit Kompressionsschutz ist.

9. Der Hydraulikantrieb (1b) gemäß Anspruch 8, **dadurch gekennzeichnet, dass** der Kopf (6) des Kolbens (2) mindestens eine Leitung (19) hat, die ausgebildet ist, um den ersten Abschnitt (10) mit einer der Kammern (4) zu verbinden, die am oberen Ende des Kopfs (6) des Kolbens (2) bestimmt ist.

10. Der Hydraulikantrieb (1a, 1b) gemäß einem oder mehreren der obigen Ansprüche, **dadurch gekennzeichnet, dass** er einen Hubbegrenzer (20) des ersten beweglichen Elements (7) umfasst, angeordnet in dem länglichen Hohlraum (8), um das Mindestvolumen zu begrenzen, auf welches das zweite Fluid komprimiert werden kann.

## Revendications

1. Actionneur hydraulique (1a, 1b), en particulier du type à absorption de choc et/ou à amortissement, comprenant un piston (2) qui est logé de sorte qu'il peut coulisser hermétiquement dans un cylindre creux (3) afin de diviser le volume interne dudit cylindre creux (3) en deux chambres (4, 5) mutuellement séparées par la tête (6) dudit piston (2), lesdites deux chambres (4, 5) pouvant être raccordées séparément, respectivement au moyen d'un conduit de distribution (18) et d'au moins un conduit de décharge (17), à un premier circuit adapté pour alimenter, sous pression, un premier fluide à l'une desdites deux chambres (4, 5) avec le vidage consécutif de l'autre desdites deux chambres (4, 5) pour le mouvement d'extension ou de compression dudit piston (2) par rapport audit cylindre creux (3), dans lequel l'actionneur hydraulique (1a, 1b) comprend un premier élément mobile (7) qui est logé de sorte qu'il peut coulisser hermétiquement dans une cavité longitudinale (8) définie à l'intérieur d'une tige (9) dudit piston (2) afin de diviser ladite cavité longitudinale (8) en deux parties (10, 11) avec la première (10) desdites deux parties, raccordée à l'une desdites chambres (4, 5) et avec la seconde (11) desdites deux parties, pouvant être raccordée à un second circuit adapté pour alimenter, sous pression, un second fluide dans ladite seconde partie (11), ledit second fluide ayant un coefficient de compressibilité et une pression nominale supérieurs à ceux dudit premier fluide afin de servir d'absorbeur de choc et/ou d'amortisseur en cas de pics soudains de pression dans ladite chambre (4, 5) raccordée à ladite première partie (10) de ladite cavité longitudinale (8) définie à l'intérieur de ladite tige (9) dudit piston (2),
**caractérisé en ce que** l'actionneur hydraulique (1a, 1b) comprend en outre au moins une soupape de sécurité (100) de type à double effet avec le contrôle limité sur la distribution et une soupape de pression maximum sur le retour, qui est raccordée, par voie hydraulique, audit au moins un conduit de distribution (18) et audit au moins un conduit de décharge (17), afin de pouvoir modifier l'action d'absorption de choc et/ou d'amortissement dudit actionneur hydraulique (1a, 1b), dans lequel ladite au moins une soupape de sécurité (100) comprend un corps de soupape (101) qui définit un premier conduit d'alimentation ou de décharge (102) prévu avec une première soupape à une voie normalement fermée (103) et avec un premier orifice calibré (104) qui est parallèle à ladite première soupape à une voie (103) et un second conduit d'alimentation ou de décharge (105), qui sont raccordés à une chambre principale (106) définie à l'intérieur dudit corps de soupape (101), ledit premier conduit d'alimentation ou de décharge (102) étant raccordé audit conduit de distribution (18) au moyen d'une deuxième soupape à une voie normalement fermée (107) qui est logée à l'intérieur de ladite chambre principale (106) et permet un écoulement dudit premier conduit d'alimentation ou de décharge (102) vers ledit conduit de distribution (18), ledit second conduit d'alimentation ou de décharge (105) étant raccordé audit conduit de décharge (17) au moyen d'une troisième soupape à une voie normalement fermée (108) et d'une quatrième soupape à une voie normalement fermée (109), qui sont logées à l'intérieur de ladite chambre principale (106) en séquence les unes par rapport aux autres et permettent un écoulement dudit second conduit d'alimentation ou de décharge (105) vers ledit conduit de décharge (17), dans lequel entre ledit premier conduit d'alimentation ou de décharge (102) et ledit second conduit d'alimentation ou de décharge (105), on prévoit une glissière pilote (110) qui est logée entre ladite deuxième soupape à une voie (107) et ladite troisième soupape à une voie (108), de sorte qu'elle peut coulisser hermétiquement dans ladite chambre principale (106), dans lequel entre ladite troisième soupape à une voie (108) et ladite quatrième soupape à une voie (109), on prévoit un second orifice calibré (111) et également une soupape de pression maximum (112) logés dans ledit corps de soupape (101) et dans lequel la soupape de pression maximum (112) est raccordée à ladite troisième soupape à une voie (108) et à ladite quatrième soupape à une voie (109) afin de contourner ledit second orifice calibré (111).

2. Actionneur hydraulique (1a, 1b) selon la revendication 1, **caractérisé en ce qu'**il comprend des moyens de régulation d'écoulement de fluide (12) intercalés entre ladite première partie (10) et ladite chambre (4, 5) raccordée à ladite première partie (10).

3. Actionneur hydraulique (1a, 1b) selon la revendication 2, **caractérisé en ce que** lesdits moyens de régulation d'écoulement de fluide (12) définissent un canal de raccordement principal (13) et au moins un canal de raccordement secondaire (14), ledit canal de raccordement principal (13) ayant une section de passage qui a un plus grand diamètre que la section de passage dudit au moins un canal de raccordement secondaire (14) et étant prévu avec une soupape à une voie normalement fermée (15) adaptée pour empêcher le passage dudit premier fluide de ladite première partie (10) à ladite chambre (4, 5), ledit au moins un canal de raccordement secondaire (14) étant dépourvu d'obstructions.

4. Actionneur hydraulique (1a, 1b) selon la revendication 3, **caractérisé en ce que** ladite soupape à une voie (15) est du type avec une bille qui peut se déplacer en contraste avec l'action de moyens élastiques.

5. Actionneur hydraulique (1a, 1b) selon une ou plusieurs des revendications précédentes, **caractérisé en ce que** ledit premier fluide est de l'huile et ledit second fluide est du gaz.

6. Actionneur hydraulique (1a) selon une ou plusieurs des revendications précédentes, **caractérisé en ce qu'**il est du type avec protection d'extension.

7. Actionneur hydraulique (1a) selon la revendication 6, **caractérisé en ce que** ladite tête (6) dudit piston (2) a au moins un conduit (16) adapté pour raccorder ladite première partie (10) à l'une desdites chambres (5) qui est définie autour de ladite tige (9) dudit piston (2).

8. Actionneur hydraulique (1b) selon une ou plusieurs des revendications 1 à 5, **caractérisé en ce qu'**il est du type avec protection de compression.

9. Actionneur hydraulique (1b) selon la revendication 8, **caractérisé en ce que** ladite tête (6) dudit piston (2) a au moins un conduit (19) adapté pour raccorder ladite première partie (10) à l'une desdites chambres (4) qui est définie au niveau de la couronne de ladite tête (6) dudit piston (2).

10. Actionneur hydraulique (1a, 1b) selon une ou plusieurs des revendications précédentes, **caractérisé en ce qu'**il comprend un limiteur de course (20) dudit premier élément mobile (7) agencé dans ladite cavité longitudinale (8) afin de limiter le volume minimum dans lequel ledit second fluide peut être comprimé.
